# EUROPEAN PATENT APPLICATION

(11) **EP 3 825 848 A1**
(43) Date of publication of application: **26.05.2021**
(21) Application number: 20217333.2
(22) Date of filing: 01.04.2020
(51) Int. Cl.: G06F 9/38

(54) **DATA PROCESSING METHOD AND APPARATUS, AND RELATED PRODUCT**

(30) Priority: 04.04.2019 CN 201910272411; 04.04.2019 CN 201910272625; 04.04.2019 CN 201910272660; 19.04.2019 CN 201910320091; 19.04.2019 CN 201910319165; 25.04.2019 CN 201910340177; 25.04.2019 CN 201910341003
(62) Divisional of application: 20783678.4
(71) Applicant: Cambricon Technologies Corporation Limited, Beijing 100191 (CN)
(72) Inventor: LIU, Shaoli, Beijing, 100190 (CN); WANG, Bingrui, Beijing, 100190 (CN); LIANG, Jun, Beijing, 100191 (CN)
(74) Representative: Huang, Liwei

(57) **Abstract**

The present disclosure provides a data processing method and an apparatus and a related product. The products include a control module including an instruction caching unit, an instruction processing unit, and a storage queue unit. The instruction caching unit is configured to store computation instructions associated with an artificial neural network operation; the instruction processing unit is configured to parse the computation instructions to obtain a plurality of operation instructions; and the storage queue unit is configured to store an instruction queue, where the instruction queue includes a plurality of operation instructions or computation instructions to be executed in the sequence of the queue. By adopting the above-mentioned method, the present disclosure can improve the operation efficiency of related products when performing operations of a neural network model.

## Description

### Technical Field

The disclosure relates generally to the field of computer technologies, and more specifically to a data processing method and an apparatus and related products.

### Background

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.*) when designing parameters, so as to generate instructions and transmit the instructions to the processors to complete the data access. The above-mentioned method reduces the processing efficiency of the processors.

### Summary

In order to solve the technical problems, the present disclosure provides a data processing technical solution.

A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.

A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.

A third aspect of the present disclosure provides a neural network chip including the data processing apparatus.

A fourth aspect of the present disclosure provides an electronic device including the neural network chip.

A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.

According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.

In order to make other features and aspects of the present disclosure clearer, a detailed description of exemplary embodiments with reference to the drawings is provided below.

### Brief Description of the Drawings

The accompanying drawings contained in and forming part of the specification together with the specification show exemplary embodiments, features and aspects of the present disclosure and are used to explain the principles of the disclosure.
Fig. 1 shows a schematic diagram of an application scenario of an operation method of a processor according to an embodiment of the present disclosure.
Fig. 2 shows a flowchart of an operation method of a processor according to an embodiment of the present disclosure.
Fig. 3a and Fig. 3b show schematic diagrams of application scenarios of an operation method of a processor according to an embodiment of the present disclosure.
Fig. 4a and Fig. 4b show schematic diagrams of application scenarios of an operation method of a processor according to an embodiment of the present disclosure.
Fig. 5a and Fig. 5b show schematic diagrams of application scenarios of an operation method of a processor according to an embodiment of the present disclosure.
Fig. 6 shows a schematic diagram of a circular buffer and storage area of an operation method of a processor according to an embodiment of the present disclosure.
Fig. 7 shows a block diagram of an operation apparatus of a processor according to an embodiment of the present disclosure.
Fig. 8 shows a block diagram of a board card according to an embodiment of the present disclosure.

### Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments. The use of "first", "second" and similar terms in this specification does not imply any order, quantity or importance, but only to distinguish the different components.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

An embodiment of the present disclosure provides an operation method of a processor.

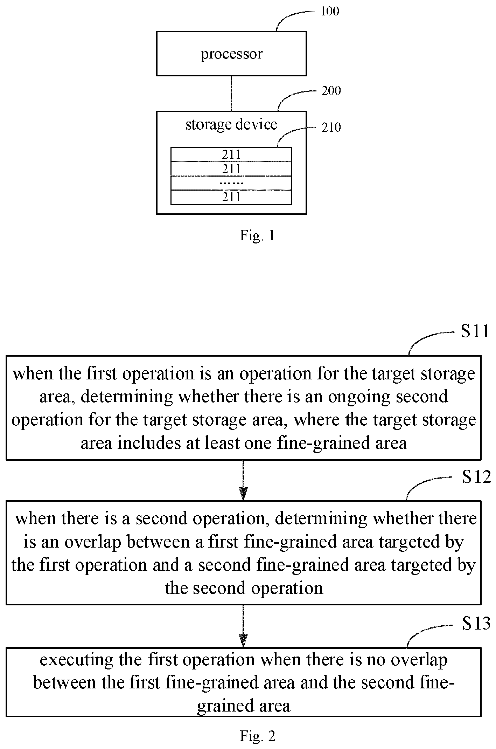

Fig. 2 shows a flowchart of an operation method of a processor according to an embodiment of the present disclosure. The operation method of the processor may be applied to a processor.

As shown in Fig. 2, the operation method of the processor includes:
a step S11, when the first operation is an operation for the target storage area, determining whether there is an ongoing second operation for the target storage area, where the target storage area includes at least one fine-grained area.

The first operation may be a reading operation or a writing operation, similarly, the second operation may be a reading operation or a writing operation. The present disclosure does not limit the specific types of the first operation and the second operation. An operation may include one or more operands. The target storage area may be a storage area corresponding to one or more operands of the first operation and the second operation. The whole storage area where the target storage area is located may be an internal memory of the processor (such as an on-chip cache or a register, *etc.*)*,* or may be an external memory connected to the processor (such as an off-chip memory, *etc.*)*.*

In a possible implementation method, the first operation and/or the second operation may include one or more operands, and the target storage area may be a storage area corresponding to any operand of the first operation and the second operation. The target storage area is a storage area corresponding to at least one operand of the first operation and at least one operand of the second operation. For example, for a first operand of the first operation and a second operand of the second operation, the first operand may be any operand of the first operation, and the second operand may be any operand of the second operation. When the first operand and the second operand are a same operand, the target storage area may be the storage area of the first operand or the storage area of the second operation. When there is an overlap between the storage area of the first operand and the storage area of the second operand, the target storage area is the overlap.

In a possible implementation method, the target storage area includes at least one fine-grained area. A method for determining the size and/or quantity of the fine-grained areas may include one or more of a determining method according to hardware design, a determining method according to related operations of the target operands, and a determining method according to related parameters in the operations. The determining method according to hardware design may refer to determining a size of a fine-grained area during hardware design, for example, one or more rows of the storage area are determined as a fine-grained area. The determining method according to related operations of the target operands includes: determining methods according to processing requirements, storage methods, or transmission methods of the target operands, for example, a target operand is a two-dimensional matrix data with a size of M*N (M and N are all positive integers), indicating the count of bytes occupied by the storage, in other words, there are M bytes in a row, and there are N rows in total, then it can be determined that M bytes is a fine-grained area, and the target storage area corresponding to the target operand includes N fine-grained areas. The determining method according to related parameters in the operations includes dividing the target storage area as a plurality of fine-grained areas according to the size and/or quantity of fine granularity carried in the operations. When the first operand of the first operation and the second operand of the second operation jointly correspond to the target storage area, according to a plurality of fine-grained areas divided in the target storage area, the first operation and the second operation may adopt the method provided in the embodiment of the present disclosure.

It should be noted that the sizes of the plurality of fine-grained areas may be the same or different. For example, the first operation may carry the size of the first fine granularity (the count of data bits of each fine-grained area), and the size of the first fine granularity may be set to 64 bits, and the second operation may carry the size of the second fine granularity (such as the count of data bits of each fine-grained area), and the size of the second fine granularity may be set to 256 bits. In other words, during the first operation, every 64 bits are taken as a fine-grained area, and during the second operation, every 256 bits are taken as a fine-grained area. For another example, the size of the fine granularity carried by the first operation and the second operation (such as the count of data bits of each fine-grained area) is 512 bits. Similarly, the first operation may also carry the count of the first fine granularity (for example, the count of the first fine granularity may be set to 4), and the second operation may also carry the count of the second fine granularity (for example, the count of the second fine granularity may be set to 8). In other words, during the first operation, the target storage area is divided as 4 fine-grained areas, and during the second operation, the target storage area is divided as 8 fine-grained areas. It can be understood that the two parameters of the size of the fine granularity and the count of the fine granularity can also be carried at the same time in the operation. The size and/or quantity of each fine-grained area can be determined according to requirements, which is not limited in the present disclosure.

In a possible implementation method, it can be determined whether there is an ongoing second operation for the target storage area according to the occupation state of the target storage area. For example, the processor may determine whether the target storage area is occupied by querying an occupancy state list, where if the target storage area is occupied, it is determined that there is an ongoing second operation for the target storage area. The occupancy state list may be preset and stored in a memory, or may be generated before the processor starts to execute a certain task, and be released after the task is completed. When the occupancy state of each storage area changes, the processor updates the content of the occupancy state list to record the occupancy state of each storage area.

In a possible implementation method, it can be determined whether there is an ongoing second operation for the target storage area by querying the execution state of each operation. For example, the storage area corresponding to the operand of each operation may be recorded, and the execution state of each operation may be further recorded. If the operation for the target storage area has not been completed, it is determined that there is an ongoing second operation for a target operation area. It can be determined whether the target storage area corresponding to the operand is occupied by determining the occupancy state of the operand, thereby determining whether there is an ongoing second operation for the target storage area. The present disclosure does not limit the basis for determining whether there is an ongoing second operation for the target storage area.

In a possible implementation method, before the first operation for the target storage area is executed, it may be determined whether there is an ongoing second operation for the target storage area.

In a possible implementation method, during the execution of the first operation for the target storage area, it may be also determined whether there is an ongoing second operation for the target storage area.

The operation method of the processor may further include:
a step S12, when there is a second operation, determining whether there is an overlap between a first fine-grained area targeted by the first operation and a second fine-grained area targeted by the second operation.

The first fine-grained area and the second fine-grained area may be any fine-grained area in the plurality of fine-grained areas in the target storage area. It can be understood that the operation for the target storage area is an operation for each fine-grained area in the target storage area. For example, a target storage area A is from the first row to the tenth row, each row is a fine-grained area, and the target storage area A includes 10 fine-grained areas. The writing operation for the target storage area A can be regarded as a writing operation for the 10 fine-grained areas, where the execution process is: writing the first fine-grained area (in the first row), writing the second fine-grained area (in the second row) after the first fine-grained area is written, and writing the third fine-grained area (in the third row) after the second fine-grained area is written, and so on, until the tenth fine-grained area (in the tenth row) is written, and then the writing operation for the target storage area A is completed.

When there is an operation for the target storage area, as the operation is executed, the fine-grained areas in the target storage area may include fine-grained areas that have been processed, fine-grained areas that are being processed, and fine-grained areas that have not been processed. The state of a fine-grained area currently targeted by the operation is a state of being processed. Therefore, when there is an operation for the target storage area, it may be considered that there is an operation for a fine-grained area in the target storage area, and the fine-grained area being processed is the fine-grained area currently targeted by the operation.

In a possible implementation method, a first fine-grained area targeted by the first operation may include a fine-grained area targeted by the first operation to be executed, which is usually a first fine-grained area. Optionally, the first fine-grained area targeted by the first operation may further include any fine-grained area currently targeted by the first operation which is being executed. A second fine-grained area currently targeted by the second operation may be any fine-grained area currently targeted by the second operation which is being executed.

In a possible implementation method, before the first operation on the target storage area is executed, it is determined whether there is an ongoing second operation on the target storage area, and the first fine-grained area currently targeted by the first operation is the fine-grained area to be processed in the first operation. For example, before the first operation on the target storage area is executed, the first fine-grained area currently targeted by the first operation is usually a first fine-grained area of the target storage area. At this time, the first operation on the first fine-grained area has not been executed, and the second fine-grained area currently targeted by the ongoing second operation may be related to the process of the second operation. If the second operation has just started, the second fine-grained area may also be the first fine-grained area of the target storage area, at this time, there is an overlap between the first fine-grained area and the second fine-grained area. If the second operation has been executed on the first fine-grained area, the second fine-grained area currently targeted is a P-th fine-grained area (P is an integer greater than 1), and there is no overlap between the first fine-grained area and the second fine-grained area.

In a possible implementation method, when determining whether there is an ongoing second operation for the target storage area during the process of the first operation executed on the target storage area, the first fine-grained area can be determined according to the execution process of the first operation, and the second fine-grained area can be determined according to the execution process of the second operation, and then whether there is an overlap between the first fine-grained area and the second fine-grained area can be determined.

In a possible implementation method, if the cycle of the execution process of each operation is the same, it can be determined whether there is an ongoing second operation for the target storage area only before the first operation for the target storage area is executed, and it can be determined whether there is an overlap between the first fine-grained area and the second fine-grained area, where the same cycle means that when the sizes of the fine-grained areas are the same, two operations have the same operation duration for a fine-grained area.

In a possible implementation method, if the cycle of the execution process of each operation is not the same or it cannot be determined whether it is the same, during the process of the first operation performed on the target storage area, after the operation on the first fine-grained area currently targeted is completed, it is determined whether there is an ongoing second operation for the target operation area, and then it is determined whether there is an overlap between the first fine-grained area and the second fine-grained area to determine whether to perform the first operation.

In a possible implementation method, it can be determined whether there is an overlap between the first fine-grained area targeted by the first operation and the second fine-grained area targeted by the second operation according to a physical address, a position of a pointer, and an identifier of the fine-grained area. For example, the current physical address of each operation can be recorded. In this way, according to the current physical address of the first operation and the current physical address of the second operation, and the correspondence between the physical address and the fine-grained area, the first fine-grained area currently targeted by the first operation, and the second fine-grained area currently targeted by the second operation can be determined respectively, and then whether there is an overlap between the first fine-grained area and the second fine-grained area can be determined. The physical address may include one or more of a start address of the fine-grained area, an end address of the fine-grained area, an address of a preset position of the fine-grained area, and an address of a real-time operation of the fine-grained area. For another example, a pointer can be preset for each operation, and the pointer points to the fine-grained area to which the operation is currently targeted. According to the position of the pointer of the first operation, and the position of the pointer of the second operation, the first fine-grained area currently targeted by the first operation and the second fine-grained area currently targeted by the second operation can be determined respectively, and then whether there is an overlap between the first fine-grained area and the second fine-grained area can be determined. For another example, an identifier for each fine-grained area may be preset, and then whether there is an overlap between the first fine-grained area and the second fine-grained area can be determined by recording the identifier of the fine-grained area currently targeted by the operation. The identifier may include any combination of letters, numbers, or symbols. Other ways may be adopted to determine whether there is an overlap between the first fine-grained area and the second fine-grained area. The present disclosure does not limit the basis for determining whether there is an overlap between the first fine-grained area and the second fine-grained area.

The operation method of the processor may further include:
a step S13, executing the first operation when there is no overlap between the first fine-grained area and the second fine-grained area.

In a possible implementation method, if there is no overlap between the first fine-grained area targeted by the first operation and the second fine-grained area targeted by the second operation, the first fine-grained area may be a fine-grained area that has been processed in the second operation, or a fine-grained area that does not need to be processed in the second operation. At this time, executing the first operation will not affect the process and result of the second operation, and the first operation can be executed.

According to the embodiment, when the target storage area targeted by the first operation includes at least one fine-grained area, and there is an ongoing second operation for the target storage area, whether there is an overlap between the first fine-grained area currently targeted by the first operation and the second fine-grained area currently targeted by the second operation may be determined. If there is no overlap between the first fine-grained area currently targeted by the first operation and the second fine-grained area currently targeted by the second operation, the first operation will be executed. In this way, the first operation will be executed if there is no overlap between the fine-grained area currently targeted by the first operation and the fine-grained area currently targeted by the second operation, so that the first operation and the second operation can be executed to process the target storage area at the same time, which improves the processing efficiency of the processor.

In a possible implementation method, the operation method of the processor further includes: when there is an overlap between the first fine-grained area and the second fine-grained area, blocking the first operation.

In a possible implementation method, the first fine-grained area overlaps with the second fine-grained area, including that the first fine-grained area completely overlaps or partially overlaps with the second fine-grained area. When there is an overlap between the first fine-grained area and the second fine-grained area, if the first operation is executed, the operation of the first operation on the overlap may affect the execution of the second operation, resulting in an inaccurate operation result of the second operation, and the operation of the first operation on the overlap may further affect the execution of the first operation, resulting in an inaccurate operation result of the first operation. At this time, the first operation may be blocked, in other words, the first operation may be suspended, and the first operation may be executed after the second fine-grained area currently targeted by the second operation has been processed. In other words, when there is no overlap between the first fine-grained area and the second fine-grained area, the first operation will be executed.

In the embodiment, the blocking the first operation when there is an overlap between the first fine-grained area and the second fine-grained area may avoid operation errors and inaccurate operation results caused by the overlap between the fine-grained areas of each operation, and ensure the correctness of each operation.

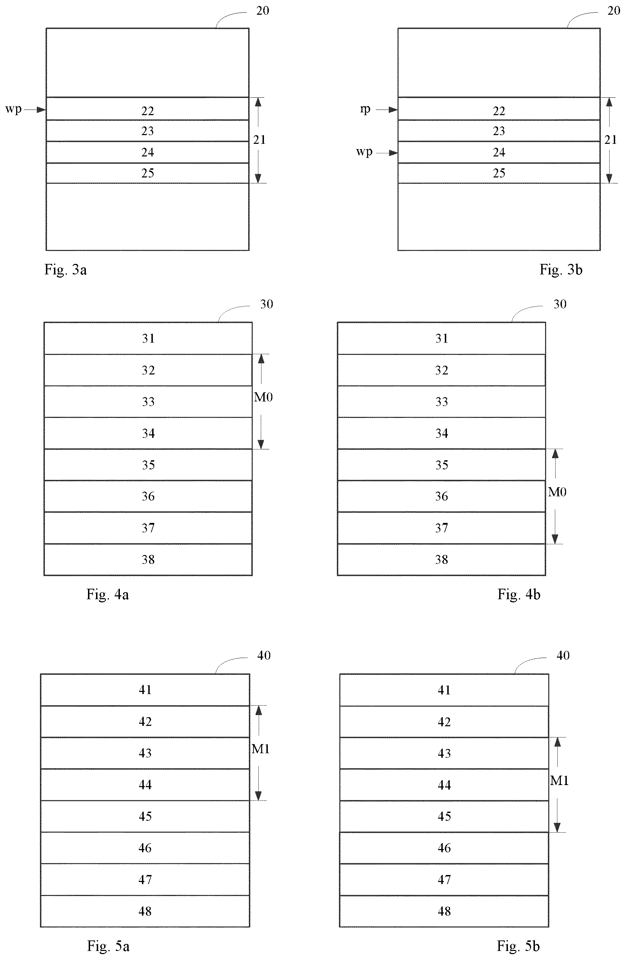

Fig. 3a and Fig. 3b show schematic diagrams of application scenarios of an operation method of a processor according to an embodiment of the present disclosure. As shown in Fig. 3a and Fig. 3b, an entire storage area 20 includes a target storage area 21, where the target storage area 21 is divided as four fine-grained areas, followed by a fine-grained area 22, a fine-grained area 23, a fine-grained area 24, and a fine-grained area 25.

As shown in Fig. 3a, currently, only a writing operation is included. A writing pointer wp represents the fine-grained area currently targeted by the writing operation. At the beginning of the writing operation, the writing pointer wp points to the fine-grained area 22, it can be firstly determined whether there is an ongoing second operation for the target storage area 21, where if there is no second operation, the writing operation will be executed on the fine-grained area 22. When the writing operation executed on the fine-grained area 22 is completed, the writing pointer wp increases, in other words, wp++, and the writing pointer points to the next fine-grained area 23, and then it can be determined whether there is an ongoing second operation for the target storage area 22, where if there is no second operation, the writing operation will be executed on the fine-grained area 23. When the writing operation executed on the fine-grained area 23 is completed, the writing pointer wp increases, and the writing pointer points to the next fine-grained area 24, and then it can be determined whether there is an ongoing second operation for the target storage area 23, where if there is no second operation, the writing operation will be executed on the fine-grained area 24.

As shown in Fig. 3b, currently, a reading operation and a writing operation are included, where the reading operation is a first operation, and the writing operation is a second operation. And the writing pointer wp of the writing operation and a reading pointer rp of the reading operation represent the fine-grained areas currently targeted by the writing operation and the reading operation, respectively.

During the execution of the reading operation (the first operation), it is determined whether there is an ongoing second operation for the target storage area 21. It is determined that there is an ongoing second operation (the writing operation), and it is further determined whether there is an overlap between the first fine-grained area (the fine-grained area 22 in Fig. 3b) currently targeted by the reading operation (the first operation) and the second fine-grained area (the fine-grained area 24 in Fig. 3b) currently targeted by the writing operation (the second operation). For example, it can be determined that there is no overlap between the first fine-grained area and the second fine-grained area according to the serial numbers of the fine-grained areas (22 and 24), or according to the relationship between rp and wp (rp=0, wp=2, rp<wp), and then the reading operation (the first operation) will be executed.

When the reading operation executed on the fine-grained area 22 is completed, the reading pointer rp increases, in other words, rp++, and the reading pointer points to the next fine-grained area 23, and then it can be determined whether there is an overlap between the first fine-grained area and the second fine-grained area, where if there is no overlap between the first fine-grained area and the second fine-grained area, then the first operation will be executed on the fine-grained area 23. When the reading operation executed on the fine-grained area 23 is completed, the reading pointer rp increases, and the reading pointer points to the next fine-grained area 24, and then it can be determined whether there is an overlap between the first fine-grained area and the second fine-grained area, where if the serial numbers of the fine-grained area are the same or rp=wp, it can be determined that there is an overlap between the first fine-grained area currently targeted by the first operation and the second fine-grained area currently targeted by the second operation, and then the first operation cannot be executed, and the first operation will be blocked. When the second operation executed on the fine-grained area 24 is completed, the writing pointer wp increases, and the writing pointer points to the next fine-grained area 25d, and rp<wp, the first operation can be executed.

In a possible implementation method, at least one of the first operation and the second operation may be a writing operation. In other words, the method provided in the embodiment of the present disclosure may be adopted when the operation on the target operands is writing-reading (the second operation is the writing operation and the first operation is the reading operation), a read-modify-write operation (the second operation is the reading operation and the first operation is the writing operation), or a write-modify-write operation (both the second operation and the first operation are writing operations).

For example, if the first operation is a reading operation and the second operation is a writing operation, the target operands read by the first operation need to be data after the second operation (the writing operation) is executed; and the serial number of the second fine-grained area targeted by the second operation is 8, then the first operation can only read the data in the fine-grained area with a serial number smaller than 8. In other words, if the first fine-grained area targeted by the first operation is any one of the fine-grained areas numbered 1 to 7, the first operation can be executed.

In a possible implementation method, if the first operation and the second operation are both reading operations, the relationship between the fine-grained areas of the first operation and the second operation will not affect the operation result, and the method provided in the embodiment of the present disclosure may be adopted, or the first operation may be executed directly without determining the fine-grained areas.

In the embodiment, if at least one of the first operation and the second operation is a writing operation, according to the method provided in the embodiment of the present disclosure, by dividing the target storage area as one or more fine-grained areas, and executing operations in units of fine-grained areas, operations such as a read-modify-write operation, a write-modify-read operation, and a write-modify-write operation can be executed correctly to obtain accurate results, besides, the waiting time between operations can be reduced and the efficiency of the processor can be improved.

In a possible implementation method, the size and/or quantity of the fine-grained areas may be determined according to at least one of the area where the data with a set length is located and the area where the data with a set dimension is located.

It can be understood that the size and/or quantity of the fine-grained areas may be preset before the operation is generated, or may be determined in real time when each operation is generated. The presetting the size and/or quantity of the fine-grained areas before the operation may include: determining the size and/or quantity of the fine-grained areas according to at least one of the area where the data with preset length is located and the area where the data with preset dimension is located. The data with a preset length and the data with a preset dimension may be independent of the operands of each operation, or may be comprehensively determined according to the operands of each operation in advance, which may be determined according to actual requirements. The determining the size and/or quantity of the fine-grained areas in real time when each operation is generated may include determining data with a preset length or data with a preset dimension according to the operands of each operation, in other words, at least one of the area where the data with a preset length is located and the area where the data with a preset dimension is located can be determined in real time according to the operands of each operation, and then the size and/or quantity of the fine-grained areas may be determined.

For example, the size and/or quantity of the fine-grained areas can be determined according to the size of the area where the data with a preset length is located. For example, the size of the fine-grained area can be set according to the size of the storage area where the data with a preset length among the target operands is located, and the area may have a fixed bit width. For example, a target operand B is 20* 10*5 three-dimensional data, the tensor data B is stored in a 40*25 manner (that is, there are 40 bits of data in each row, and there are total 25 rows) in the target storage area, then the length may be set as 40 bits, each row of the target storage area is set as a fine-grained area, the storage area of the target operand B may be divided as 25 fine-grained areas; or every 5 rows of the storage area may be set as a fine-grained area, and the target storage area of the target operand B may be divided as 5 fine-grained areas, which is not limited in the present disclosure.

It should be noted that the size and/or quantity of the fine-grained areas can be determined in the target storage area according to at least one of the area where the data with a preset length is located and the area where the data with a preset dimension is located, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the size and/or quantity of the fine-grained areas based on at least one of the area where the data with preset length is located and the area where the data with preset dimension is located.

In a possible implementation method, the size and/or quantity of the fine-grained areas may also be determined according to the size of the area where the data with preset dimension is located. For example, a target operand C is 20*10 two-dimensional data. A target storage area of the target operand C may be divided as 10 fine-grained areas according to data with preset 1 dimension and preset length of 20.

In addition, the size and/or quantity of the fine-grained areas may also be determined according to the size of the area where the data with preset length is located in the storage area of the target operand and the size of the area where the data with preset dimension is located in the storage area of the target operand. For example, for the target operand C, fine-grained areas may be divided according to data with preset 2 dimensions and a preset size of 4*2, thereby dividing the storage area of the target operand C as 25 fine-grained areas.

It should be understood that those skilled in the art can set the size and/or quantity of the divided fine-grained areas according to actual conditions, which is not limited in the present disclosure.

In the embodiment, the size and/or quantity of the fine-grained areas can be determined according to the size of the area where the data with a preset length is located and/or the size of the area where the data with a preset dimension is located, where the fine-grained areas can be divided according to data characteristics, which can improve the flexibility of dividing the fine-grained areas, thereby improving the efficiency of the execution of a plurality of operations, and the division results of the fine-grained areas can be more in line with the characteristics of different operands, thereby adapting to the processing requirements of different types of operands, and then the overall execution efficiency of a plurality of operations can be improved.

In a possible implementation method, the size and/or quantity of the fine-grained areas may be determined according to at least one of the computing capability of the hardware and the bandwidth of the hardware.

The computing capability of the hardware may refer to the amount of data processed in parallel by the hardware in one computing cycle, and the bandwidth of the hardware may refer to the data transfer capability, such as the amount of data transmitted per unit time.

For example, for the processor that applies the operation method, the computing capability of the hardware of the processor may include: processing 100-bit of data in parallel in one computing cycle, and the bandwidth of the hardware of the processor may include: transferring 200-bit of data per unit time. A target storage area with a size of 1000-bit data may be divided as 10 fine-grained areas according to the computing capability of the hardware, where each fine-grained area includes 100-bit data; or the target storage area with a size of 1000-bit data may be divided as 5 fine-grained areas according to the bandwidth of the hardware, where each fine-grained area includes 200-bit data.

It should be understood that the computing capability of the hardware and the bandwidth of the hardware may be different because the processors are different, and the present disclosure does not limit the computing capability of the hardware and the bandwidth of the hardware.

It should be understood that the size and/or quantity of the fine-grained areas in the target storage area may be determined according to at least one of the hardware computing capability and the hardware bandwidth, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the size and/or quantity of the fine-grained areas based on at least one of the computing capability of the hardware and the bandwidth of the hardware.

By adopting the above-mentioned method provided by the present disclosure, the size and/or quantity of the fine-grained areas may be determined according to the processing capability of the processor (the computing capability of the hardware and/or the bandwidth of the hardware, so that the division results of the fine-grained area are more in line with the requirements of different operating environment of the hardware, and the operation executed based on the fine-grained areas is synchronized with the processing power of the processor, and the execution efficiency of the hardware can be brought into play as much as possible, and then the processing efficiency of the processor may be improved.

In a possible implementation method, the first operation may be an operation in a first processing instruction, the second operation may be an operation in a second processing instruction, and the second processing instruction may be a processing instruction prior to the first processing instruction in the instruction queue.

The first processing instruction and the second processing instruction may include one or more of a data access instruction, an operation instruction, a synchronization instruction, and a communication instruction. For example, an instruction is a Reading And Writing operation instruction. The present disclosure does not limit the specific types of the first processing instruction and the second processing instruction.

In a possible implementation method, the first instruction may have a dependency relationship with the second instruction, for example, the first instruction needs to use a computation result of the second instruction. The first instruction may also have no dependency relationship with the second instruction. When the first instruction have a dependency relationship with the second instruction, the first instruction and the second instruction can be executed in parallel through the method in the embodiment of the present disclosure.

In the embodiment, the first operation and the second operation may be operations in different instructions. By adopting the method in the embodiment of the present disclosure, the instruction execution efficiency can be improved.

In a possible implementation method, the first operation and the second operation may be also two operations in a same processing instruction, where the second operation may be independent of the first operation, or the second operation may be based on the result of the first operation. The processing instruction may include one or more of a data access instruction, an operation instruction, a synchronization instruction, and a communication instruction. For example, if the instruction is a "Reading And Adding" operation instruction, the first operation is a reading operation, and the second operation is an addition operation. The present disclosure does not limit the specific type of the processing instruction.

In a possible implementation method, the operation method of the processor further includes: recording a first position information of a first fine-grained area currently operated by the first operation and a second position information of a second fine-grained area currently operated by the second operation.

The step S13 includes: when the first position information is inconsistent with the second position information, executing the first operation.

In a possible implementation method, position information may include identification information of the fine-grained areas. The identification information may include any combination of numbers, letters, and symbols, which is not limited in the present disclosure.

For example, the position information can be represented by the serial numbers of the fine-grained areas. The target storage area can be divided as 6 fine-grained areas, which are sequentially numbered 0-5. When the first operation and the second operation for the target storage area are executed, the first position information (for example, the serial number is 2) of the first fine-grained area currently operated by the first operation and the second position information (for example, the serial number is 5) of the second fine-grained area currently operated by the second operation may be recorded, respectively; then it can be known that the first position information is not consistent with the second position information according to the relationship between the serial numbers (2<5); at this time, the first operation can be executed.

In a possible implementation method, the position information may include address information of the fine-grained areas. The address information may include one or more of a start address of the fine-grained area, an end address of the fine-grained area, an address of a preset position of the fine-grained area, and an address offset. For example, the position information of a fine-grained area is ADDR15 -ADDR31.

By adopting the above-mentioned method provided by the present disclosure, the position information can be used to directly and efficiently determine whether there is an overlap between the first fine-grained area and the second fine-grained area, and determine whether to execute the first operation, which can improve the execution efficiency of the processor.

In a possible implementation method, the first position information may include a first count of fine-grained areas that have been processed in the first operation, and the second position information may include a second count of fine-grained areas that have been processed in the second operation.

When the first position information is inconsistent with the second position information, the first operation will be executed. When the first operation is an operation after the second operation, and the first count is less than the second count, the first operation will be executed.

For example, the first operation is an operation executed after the second operation, and the target storage area of the first operation is divided as 6 fine-grained areas, and the position information of the 6 fine-grained areas can be represented by the count of fine-grained areas that have been completed. When the first operation and the second operation for the target storage area are executed, a first count of fine-grained areas (for example, the first count is 3) that has been processed in the first operation and a second count of fine-grained areas (for example, the second count is 5) that has been processed in the second operation may be recorded, respectively; and then according to the executing order of the first operation and the second operation, it can be known that the first operation is an operation executed after the second operation, and the first count 3 is less than the second count 5, at this time, the first operation can be executed.

By adopting the above-mentioned method provided by the present disclosure, according to the count of fine-grained areas that have been completed, it can be intuitively determined whether there is an overlap between the first fine-grained area and the second fine-grained area, so that whether to execute the first operation can be determined, which can simplify the determination process and improve the execution efficiency of the processor.

In a possible implementation method, the target storage area may include an operable area and an inoperable area. The operation method of the processor further includes a step S12: when there is a second operation and the first fine-grained area currently targeted by the first operation is located in the operable area, determining whether there is an overlap between the first fine-grained area currently targeted by the first operation and the second fine-grained area currently targeted by the second operation.

In a possible implementation method, the target storage area may include one or more inoperable areas, and may also include continuous or discontinuous inoperable areas.

In a possible implementation method, the target storage area may include one or more operable areas, and may also include continuous or discontinuous operable areas, which is not limited in the present disclosure.

In a possible implementation method, when the first operation is an operation for the target storage area, whether there is an ongoing second operation for the target storage area is determined firstly; when there is a second operation, it is determined whether the first fine-grained area targeted by the first operation is located in the operable area; when there is a second operation, and the first fine-grained area targeted by the first operation is located in the operable area, then it is determined whether there is an overlap between the first fine-grained area targeted by the first operation and the second fine-grained area targeted by the second operation; and when there is no overlap between the first fine-grained area and the second fine-grained area, the first operation will be executed.

In a possible implementation method, the inoperable area may include prohibited operation areas and non-prohibited operation areas. If the first operation is a writing operation, when part of the data of the target operand cannot be modified, the storage area of the part of the tensor data can be set as a prohibited operation area to avoid accidentally modifying the part of tensor data. If the ongoing second operation is a reading operation (a read-modify-write operation) to read data before the first operation, one or more fine-grained areas where the second operation is located can be set as non-prohibited operation areas; after the data in the non-prohibited operation area has been read by adopting the second operation, the non-prohibited operation area can be changed to an operable area. The present disclosure does not limit the classification and division of inoperable area.

In the embodiment, whether the fine-grained area of the first operation is operable can be determined firstly, and then the relationship between the fine-grained areas of different operations may be determined, which improves the efficiency of determination, and protects the specified data to prevent wrong operations. In addition, it is also possible to prohibit reading and writing on a specified space, thereby reserving this space for executing other operations, which further improves the flexibility of the processor when executing fine-grained synchronization.

In a possible implementation method, the inoperable area may be a plurality of fine-grained areas including the second fine-grained area, and the position of the second fine-grained area in the inoperable area is updated with the update of the operating position of the second operation. The operation method of the processor further includes: after the second fine-grained area targeted by the second operation moves out of the inoperable area, updating the position of the inoperable area.

In other words, the inoperable area including the second fine-grained area may not be updated with the update of the second fine-grained area targeted by the second operation; after the second fine-grained area moves out of the inoperable area, the position of the inoperable area is updated. For example, the inoperable area may be Q fine-grained areas (Q is an integer greater than 1) including the second fine-grained area, and the current inoperable area includes a second fine-grained area to a 2+Q-1-th fine-grained area. When Q fine-grained areas in the inoperable area have been executed by adopting the second operation, the Q fine-grained areas move out of the inoperable area, and then the position of the inoperable area is updated with the update of the position of the fine-grained areas targeted by the second operation. The updated inoperable area includes a 2+Q-th fine-grained area to a 2+Q+Q-1-th fine-grained area, where the value of Q can be determined arbitrarily according to the demands.

Fig. 4a and Fig. 4b show schematic diagrams of application scenarios of an operation method of a processor according to an embodiment of the present disclosure. As shown in Fig. 4a, a target storage area 30 includes 8 fine-grained areas, where the operable area includes 5 fine-grained areas (a fine-grained area 31, a fine-grained area 35, a fine-grained area 36, a fine-grained area 37, and a fine-grained area 38); an inoperable area M0 includes 3 fine-grained areas (a fine-grained area 32, a fine-grained area 33, and a fine-grained area 34). The second fine-grained area currently targeted by the second operation is the fine-grained area 32.

After the second operation has been executed on the fine-grained area 32, the second fine-grained area currently targeted by the second operation is the fine-grained area 33, at this time, the second fine-grained area (the fine-grained area 33) currently targeted by the second operation does not move out of the inoperable area, and the position of the inoperable area is not updated. After the second operation has been executed on the fine-grained area 33, the second fine-grained area currently targeted by the second operation is the fine-grained area 34, at this time, the second fine-grained area (the fine-grained area 34) currently targeted by the second operation does not move out of the inoperable area, and the position of the inoperable area is not updated. After the second operation has been executed on the fine-grained area 34, the second fine-grained area currently targeted by the second operation is the fine-grained area 35, at this time, the second fine-grained area (the fine-grained area 35) currently targeted by the second operation moves out of the inoperable area, and then the position of the inoperable area is updated to the fine-grained areas 35, 36, and 37. It should be noted that the present disclosure does not limit the size of the inoperable area.

As shown in Fig. 4b, after the position of the inoperable area is updated, in the target storage area 30, the operable area includes 5 fine-grained areas (the fine-grained area 31, the fine-grained area 32, the fine-grained area 33, the fine-grained area 34, and the fine-grained area 38), and the inoperable area M0 includes 3 fine-grained areas (the fine-grained area 35, the fine-grained area 36, and the fine-grained area 37).

By adopting the above-mentioned method provided by the present disclosure, there is no need to update the position of the inoperable area in real time, which could reduce the overhead of updating the inoperable area.

In a possible implementation method, the inoperable area may include a plurality of fine-grained areas including the second fine-grained area, and the second fine-grained area is located at a set position in the inoperable area, and the position of the inoperable area is updated with the update of the operating position of the second operation.

In other words, when the inoperable area includes a plurality of fine-grained areas including the second fine-grained area, the position of the second fine-grained area in the inoperable area (such as a middle position and a lowest position) can be set, and the position of the inoperable area is updated with the update of the operating position of the second operation. For example, the inoperable area may include Q fine-grained areas including the second fine-grained area, and the current inoperable area includes a second fine-grained area to a 2+Q-1-th fine-grained area, and the set position of the second fine-grained area in the inoperable area is the R-th (R≤Q) fine-grained area. After the second operation has been executed on the current fine-grained area, the second operation is executed on the next fine-grained area, at this time, the position of the inoperable area is updated with the update of the operating position of the second operation, and the updated inoperable area includes a 2+1-th fine-grained area to a 2+Q-th fine-grained area, where the value of Q and R may be determined according to requirements. The present disclosure does not limit the count of fine-grained areas included in the inoperable area and the position of the second fine-grained area in the inoperable area.

Fig. 5a and Fig. 5b show schematic diagrams of application scenarios of an operation method of a processor according to an embodiment of the present disclosure. As shown in Fig. 5a, the target storage area 40 includes 8 fine-grained areas, where the operable area includes 5 fine-grained areas (a fine-grained area 41, a fine-grained area 45, a fine-grained area 46, a fine-grained area 47, and a fine-grained area 48), and the inoperable area M1 includes 3 fine-grained areas (a fine-grained area 42, a fine-grained area 43, and a fine-grained area 44). The second fine-grained area currently targeted by the second operation is set as a second fine-grained area located in the inoperable area M1, in other words, the fine-grained area 43.

After the second operation has been executed on the fine-grained area 43, the second fine-grained area currently targeted by the second operation is the fine-grained area 44, at this time, the position of the inoperable area is updated with the update of the operating position of the second operation, so that the second fine-grained area currently targeted by the second operation is located in the second fine-grained area in the inoperable area M1.

As shown in Fig. 5b, after the position of the inoperable area is updated, in the target storage area 40, the operable area includes 5 fine-grained areas (the fine-grained area 41, the fine-grained area 42, the fine-grained area 46, the fine-grained area 47, and the fine-grained area 48), and the inoperable area M1 includes 3 fine-grained areas (the fine-grained area 43, the fine-grained area 44, and the fine-grained area 45).

By adopting the above-mentioned method provided by the present disclosure, the position of the inoperable area can be updated in real time, and the degree of synchronization of fine-grained processing can be improved, thereby further improving the efficiency of data synchronization.

In a possible implementation method, the target storage area may include a circular buffer and storage area. The circular buffer and storage area can be used to store data cyclically.

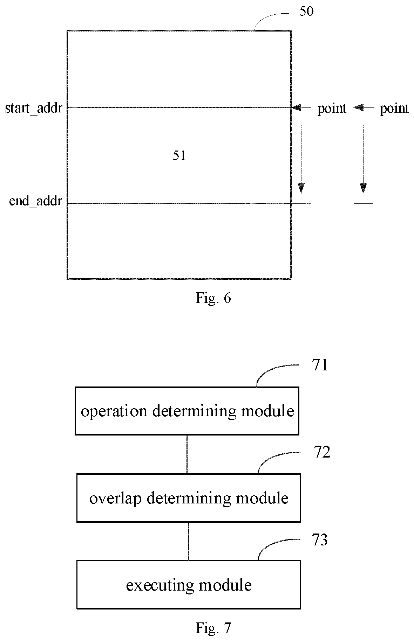

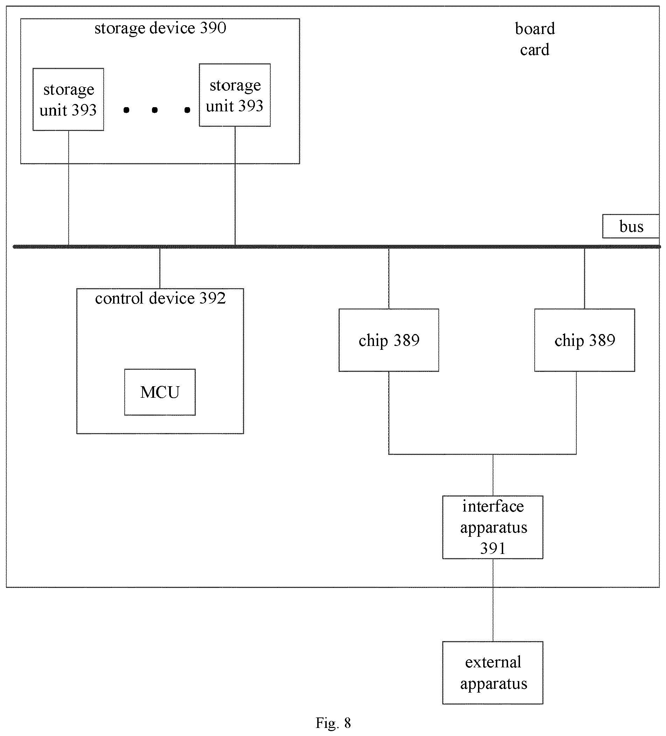

Fig. 6 shows a schematic diagram of a circular buffer and storage area of an operation method of a processor according to an embodiment of the present disclosure. As shown in Fig. 8, a target storage area 50 includes a circular buffer and storage area 51, and the address of the circular buffer and storage area 51 is start_addr∼end_addr.

For example, the second operation is a writing operation, by adopting the second operation, the target operands may be written into the circular buffer and storage area 51, and the address pointer *point* starts from pointing to the start address start_addr, and then the data is stored sequentially until the address pointer *point* points to the end address end_addr, in other words, the storage space of the circular buffer 51 is fully occupied, at this time, the address pointer *point* jumps back to start addr to determine whether the address is used by the first operation that needs to be synchronized. If the address is used, the data is stored into this address to cover the original data, and then the address pointer *point* moves downward in turn until the address pointer *point* points to the end_addr, at this time, the data may be covered again, and the above process is repeated.

In the embodiment, the circular buffer and storage area is used to store data, which can save data storage space and improve the utilization of storage space.

In a possible implementation method, the circular buffer and storage area can be divided as a plurality of fine-grained areas. For each fine-grained area, whether the data in the fine-grained area can be covered can be managed through a list or flag bit or other methods. For example, the coverage flag bit can be set to indicate whether the data in the fine-grained area can be covered.

For example, the first operation is a reading operation, and the second operation is a writing operation, in other words, reading is performed after writing, a writing pointer wp and a reading pointer rp can be used to indicate fine-grained areas currently targeted by the second operation and the first operation, respectively. When the coverage flag bit of the second fine-grained area currently targeted by the second operation shows that the data can be covered, the second operation can be executed to write data; after the data writing operation is completed, the coverage flag bit of the second fine-grained area is set to show that the data cannot be covered, then wp becomes wp++; the second fine-grained area currently targeted by the second operation is a next fine-grained area, where if wp>end_addr, then wp=start_addr. When there is no overlap between the first fine-grained area and the second fine-grained area currently targeted by the first operation, and the coverage flag bit of the first fine-grained area shows that the data cannot be covered, the first operation can be executed to read data; after the data writing operation is completed, the coverage flag bit of the first fine-grained area is set to show that the data can be covered, then rp becomes rp++; the first fine-grained area currently targeted by the first operation is a next fine-grained area, where if rp>end_addr, then rp=start_addr. When there is an overlap between the first fine-grained area and the second fine-grained area, in other words, when rp=wp, the first operation cannot be executed; after the second operation has been executed on the second fine-grained area currently targeted by the second operation, the first operation will be executed.

In the embodiment, the circular buffer and storage area is divided as a plurality of fine-grained areas, so that a plurality of operations can be simultaneously executed on the circular buffer and storage area, thereby improving the processing efficiency of the processor.

In a possible implementation method, the fine-grained area may include a state indicator, and the state indicator may show whether an operation executed on the fine-grained area is completed or not completed.

The operation method of the processor further includes:
a step S13, when there is no overlap between the first fine-grained area and the second fine-grained area, determining whether the state indicator of the first fine-grained area shows that the operation executed on the first fine-grained area is completed, where if the operation executed on the fine-grained area is completed, executing the first operation.

In a possible implementation method, the fine-grained area may include a state indicator, and the state indicator may show whether an operation executed on the fine-grained area is completed or not completed. For example, the state indicator can be represented by 0 and 1, where 0 may represent that the operation executed on the fine-grained area is not completed, 1 may represent that the operation executed on the fine-grained area is completed; or 0 may represent that the operation executed on the fine-grained area is completed, 1 may represent that the operation executed on the fine-grained area is not completed. The present disclosure does not limit the way of representing the state indicator.

In a possible implementation method, the second operation may be executed to set the state indicator of the fine-grained area that has been processed in the target storage area to a completed state, and set the state indicator of the fine-grained area that is not processed or the fine-grained area that is being processed to an incomplete state. And the second operation may be executed to set the state indicator of some fine-grained areas in the fine-grained areas that have been processed to the completed state, and set the state indicator of other fine-grained areas to the incomplete state. For example, when 5 fine-grained areas have been processed in the second operation, the state indicator of the first 3 fine-grained areas can be set to the completed state, and the state indicator of other fine-grained areas can be set to the incomplete state.

In a possible implementation method, when there is an ongoing second operation for the target storage area, for the first fine-grained area currently targeted by the first operation and the second fine-grained area currently targeted by the second operation, whether the first fine-grained area has been processed can be determined after that there is no overlap between the first fine-grained area and the second fine-grained area is determined; if the first fine-grained area has been processed, the first operation will be executed.

In the embodiment, the fine-grained area may include a state indicator. When there is no overlap between the first fine-grained area and the second fine-grained area, whether the first operation can be executed may be determined according to the state indicator of the first fine-grained area, which can the accuracy of data processing while improving the processing efficiency of the processor.

In a possible implementation method, the fine-grained area may include a state indicator, and the state indicator may show whether an operation executed on the fine-grained area is completed or not completed. The step S13 further includes: determining whether the state indicator of the first fine-grained area is a completed state; if the state indicator of the first fine-grained area is a completed state, executing the first operation when there is no overlap between the first fine-grained area and the second fine-grained area.

In other words, when there is an ongoing second operation for the target storage area, for the first fine-grained area currently targeted by the first operation and the second fine-grained area currently targeted by the second operation, whether the first operation can be executed may be determined according to whether there is an overlap between the first fine-grained area and the second fine-grained area after the state indicator of the first fine-grained area is determined as the completed state; if there is no overlap between the first fine-grained area and the second fine-grained area, the first operation will be executed.

In the embodiment, the fine-grained area may include a state indicator, after the state indicator of the first fine-grained area is determined as the completed state, whether the first operation can be executed may be determined according to whether there is an overlap between the first fine-grained area and the second fine-grained area, which can improve the processing efficiency of the processor while improving the accuracy of data processing.

In a possible implementation method, the target operands of the first operation and the second operation are the same, and the target storage area is a storage area of the target operands.

In a possible implementation method, when the target operands of the first operation and the second operation are the same, the target storage area may be a storage area of a target operand, where the storage area of the target operand is the target storage area. After the target storage area is divided as a plurality of fine-grained areas, according to the method provided in the embodiment of the present disclosure, two operations on the same target operands may be executed in parallel without affecting the execution result of each operation

In the embodiment, by adopting the method provided in the embodiment of the present disclosure, two operations on the same target operands may be executed in parallel, which can improve the execution efficiency of the processor.

In a possible implementation method, the target storage area is an overlap between the first storage area of the first operand of the first operation and the second storage area of the second operand of the second operation

In a possible implementation method, when there is an overlap between the storage areas of two operands, the target storage area is the overlap. The overlap of the storage areas of the two operands may be divided as a plurality of fine-grained areas. According to the method provided in the embodiment of the present disclosure, two operations on the operands whose storage areas have an overlap may be executed in parallel without affecting the execution result of each operation.

In the embodiment, when there is an overlap between the storage areas of the operands in the two operations, by adopting the method provided in the embodiment of the present disclosure, the two operations may be executed in parallel, which may improve the execution efficiency of the processor.

In a possible implementation method, the operation method of the processor further includes: dividing the whole storage area where the target storage area is located as a plurality of fine-grained areas.

In a possible implementation method, the target storage area may be a part of the storage area or the whole storage area of the storage device, and the whole storage area may include a plurality of preset fine-grained areas.

For example, the whole storage area where the target storage area is located is RAMI, which may include m preset fine-grained areas (m is a positive integer). The target storage area may occupy n (n is a positive integer, and n<=m) fine-grained areas in the RAMI. It should be noted that the target storage area may also include a part of a fine-grained area. In the RAMI, it is assumed that each fine-grained area is a row in the whole storage area RAMI, and each row is 100 bits. The target storage area may include the first (n-1) complete fine-grained areas and part of the last fine-grained area, such as the first 80 bits in the n-th row (the n-th fine-grained area) in RAMI.

In a possible implementation method, when the whole storage area of the storage device is divided as a plurality of fine-grained areas, for any operation on any target storage area in the whole storage area, no matter whether the target storage area is the storage area of the same target operands of the first operation and the second operation, or the target storage area is the overlap between the storage area of the first operand of the first operation and the storage area of the second operand of the second operation, the fine-grained areas in the target storage area may be determined according to the division result of the fine-grained areas of the whole storage area. There is a fine-grained area with the same size in the storage area of any operand executed by any operation in the whole storage area.

In a possible implementation method, the size and/or quantity of fine-grained areas of the whole storage area can be determined according to the hardware characteristics of the storage device, in other words, the size and/or quantity of fine-grained areas of the whole storage area can be determined according to at least one of the computing capability of the hardware of the storage device and the bandwidth of the hardware of the storage device.

In the embodiment, the whole storage area where the target storage area is located is divided as a plurality of fine-grained areas, and any operation on any target storage area in the whole storage area may be executed in a same fine-grained size. Different operations may be executed in parallel by adopting the method provided in the embodiment of the present disclosure, which facilitates synchronization, improves the parallelism of operations, and thereby improves the processing efficiency of the processor.

In a possible implementation method, the operation method of the processor further includes:
according to the division information of the first fine-grained area carried in the first operation, dividing a first storage area of the first operand of the first operation as a plurality of fine-grained areas; and
according to the division information of the second fine-grained area carried in the second operation, dividing a second storage area of the second operand of the second operation as a plurality of fine-grained areas.

In a possible implementation method, the division information of the fine-grained areas may be carried in operations, where the division information of the fine-grained areas may include the size and/or quantity of the fine-grained areas. Different operations may carry different division information of the fine-grained areas, and the same type of operation may carry the same different division information of the fine-grained areas. The division information of the fine-grained areas may be carried in a set position of the operand of the operation, and the identification information of whether to execute division of the fine-grained areas can also be carried in the operation code or the operand. The present disclosure does not limit the content and representation methods in the division information of the fine-grained areas.

In a possible implementation method, the first storage area of the first operand is divided as a plurality of first fine-grained areas according to the division information of the first fine-grained area carried in the first operation. Other areas in the whole storage area where the first operand is located may not be divided as a plurality of fine-grained areas, or may be divided as a plurality of fine-grained areas according to the division information of the fine-grained areas carried in other operations, which is not limited in the present disclosure.

It can be understood that when the second operand of the second operation is the same as the first operand of the first operation, the first storage area completely overlaps the second storage area. The division information of the first fine-grained area and the division information of the second fine-grained area may be the same or different. When the division information of the first fine-grained area is different from the division information of the second fine-grained area, the first storage area may be divided as a plurality of fine-grained areas according to the division information of the second fine-grained area at the same time. In other words, different operations may be adopted to divide a same storage area as a plurality of fine-grained areas with different size or quantity. At this time, whether there is an overlap between the first fine-grained area and the second fine-grained area may be determined according to the physical address of the first fine-grained area currently targeted by the first operation and the physical address of the second fine-grained area currently targeted by the second operation; and then, the first operation and the second operation may be executed in parallel according to the determination result.

In a possible implementation method, the division information of fine-grained areas may be carried in each operation. The size and/or quantity of the fine-grained areas may be determined according to at least one of the area where the operand with a preset length is located and the area where the operand with a preset dimension is located, so that the division result of the fine-grained areas may be more in line with the type or attribute of the operands of the operations.

In the embodiment, according to the division information of the first fine-grained area carried in the first operation, the first storage area of the first operand of the first operation is divided as a plurality of fine-grained areas; and according to the division information of the second fine-grained area carried in the second operation, the second storage area of the second operand of the second operation is divided as a plurality of fine-grained areas. Dividing fine-grained areas according to the division information of the fine-grained areas carried in operations can make the division result of the fine-grained areas more in line with the requirements of each operation, and therefore, operations may be executed in parallel more flexible.

It should be understood that those skilled in the art may divide and set the target storage area as fine-grained areas according to actual conditions, which is not limited in the present disclosure.

It should be noted that although the operation method of the processor is described above by taking the above-mentioned embodiment as an example, those skilled in the art can understand that the present disclosure does not limit the specific structure of the data processing apparatus. In fact, users can set various modules flexibly according to personal preferences and/or actual application scenarios, as long as the steps conform to the technical solution of the present disclosure.

Fig. 7 shows a block diagram of an operation apparatus of a processor according to an embodiment of the present disclosure. As shown in Fig. 7, the operation apparatus of the processor includes:
an operation determining module 71 configured to determine whether there is an ongoing second operation for the target storage area when the first operation is an operation for the target storage area, where the target storage area includes at least one fine-grained area;
an overlap determining module 72 configured to determine, when there is a second operation, whether there is an overlap between a first fine-grained area currently targeted by the first operation and a second fine-grained area currently targeted by the second operation; and
an executing module 73 configured to execute the first operation when there is no overlap between the first fine-grained area and the second fine-grained area.

In a possible implementation method, the operation apparatus of the processor further includes an execution control module configured to block the first operation when there is an overlap between the first fine-grained area and the second fine-grained area.

In a possible implementation method, at least one of the first operation and the second operation is a writing operation.

In a possible implementation method, the size and/or quantity of fine-grained areas may be determined according to at least one of the area where the data with preset length is located and the area where the data with preset dimension is located.

In a possible implementation method, the size and/or quantity of the fine-grained areas may be determined according to at least one of the computing capability of hardware and the bandwidth of the hardware.

In a possible implementation method, the first operation is an operation in a first processing instruction, the second operation is an operation in a second processing instruction, and the second processing instruction may be a processing instruction prior to the first processing instruction in the instruction queue.

In a possible implementation method, the operation apparatus of the processor further includes a position recording module configured to record a first position information of a first fine-grained area currently operated by the first operation and a second position information of a second fine-grained area currently operated by the second operation. The executing module 73 includes a first executing sub-module configured to execute the first operation when the first position information is inconsistent with the second position information.

In a possible implementation method, the first position information may include a first count of fine-grained areas that have been processed in the first operation, and the second position information may include a second count of fine-grained areas that have been processed in the second operation.

The first executing sub-module is further configured to execute the first operation when the first operation is an operation after the second operation, and the first count is less than the second count.

In a possible implementation method, the target storage area may include an operable area and an inoperable area. The overlap determining module 72 includes a determining sub-module configured to, when there is a second operation, and the first fine-grained area in the target storage area currently targeted by the first operation is located in the operable area, determine whether there is an overlap between the first fine-grained area currently targeted by the first operation and the second fine-grained area currently targeted by the second operation.

In a possible implementation method, the inoperable area may include a plurality of fine-grained areas including the second fine-grained area, and the position of the second fine-grained area in the inoperable area is updated with the update of the operating position of the second operation. The operation apparatus of the processor further includes an updating module configured to update the position of the inoperable area after the second fine-grained area targeted by the second operation moves out of the inoperable area.

In a possible implementation method, the inoperable area may include a plurality of fine-grained areas including the second fine-grained area, and the second fine-grained area is located at a set position in the inoperable area, and the position of the inoperable area is updated with the update of the operating position of the second operation.

In a possible implementation method, the target storage area may include a circular buffer and storage area.

In a possible implementation method, the fine-grained area may include a state indicator, and the state indicator may show whether an operation executed on the fine-grained area is completed or not completed.

The executing module 73 includes:
a first state determining sub-module configured to, when there is no overlap between the first fine-grained area and the second fine-grained area, determine whether the state indicator of the first fine-grained area shows that the operation executed on the first fine-grained area is completed; and
a second executing sub-module configured to execute the first operation when the state indicator of the first fine-grained area shows that the operation executed on the first fine-grained area is completed.

In a possible implementation method, the fine-grained area may include a state indicator, and the state indicator may show whether an operation executed on the fine-grained area is completed or not completed.

The executing module 73 further includes:
a second state determining sub-module configured to determine whether the state indicator of the first fine-grained area shows that the operation executed on the first fine-grained area is completed; and
a third executing sub-module configured to execute the first operation when the state indicator of the first fine-grained area shows that the operation executed on the first fine-grained area is completed, and there is no overlap between the first fine-grained area and the second fine-grained area.

In a possible implementation method, the target operands of the first operation and the second operation are the same, and the target storage area is a storage area of the target operands.

In a possible implementation method, the target storage area is an overlap between the first storage area of the first operand of the first operation and the second storage area of the second operand of the second operation.

In a possible implementation method, the operation apparatus of the processor further includes a first setting module configured to divide the whole storage area where the target storage area is located as a plurality of fine-grained areas.

In a possible implementation method, the operation apparatus of the processor further incudes:
a second setting module configured to divide the first storage area of the first operand of the first operation as a plurality of fine-grained areas according to the division information of the first fine-grained carried in the first operation; and
a third setting module configured to divide the second storage area of the operand of the second operation as a plurality of fine-grained areas according to the division information of the second fine-grained carried in the second operation.

In a possible implementation method, the present disclosure further provides an artificial intelligence chip including the operation apparatus of the processor.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

In a possible implementation method, the storage device includes a plurality of groups of storage units, where each group of the storage units is connected with the neural network chip by a bus, and the storage units are DDR SDRAM; the artificial intelligence chip includes a DDR controller configured to control data transfer and data storage of each storage unit; and the interface apparatus is a standard PCIE interface.
A1. An operation method of a processor, comprising:
   when a first operation is an operation for a target storage area, determining whether there is an ongoing second operation for the target storage area, where the target storage area includes at least one fine-grained area;
   when there is a second operation, determining whether there is an overlap between a first fine-grained area currently targeted by the first operation and a second fine-grained area currently targeted by the second operation; and
   executing the first operation when there is no overlap between the first fine-grained area and the second fine-grained area.
A2. The operation method of the processor of A1, further comprising:
   blocking the first operation when there is an overlap between the first fine-grained area and the second fine-grained area.
A3. The operation method of the processor of A1, wherein at least one of the first operation and the second operation is a writing operation.
A4. The operation method of the processor of A1, wherein a size and/or quantity of fine-grained areas is determined according to at least one of an area where data with a preset length is located and an area where data with a preset dimension is located.
A5. The operation method of the processor of A1, wherein the size and/or quantity of the fine-grained areas is determined according to at least one of the computing capability of hardware and the bandwidth of the hardware.
A6. The operation method of the processor of A1, wherein the first operation is an operation in a first processing instruction, the second operation is an operation in a second processing instruction, and the second processing instruction is a processing instruction prior to the first processing instruction in an instruction queue.
A7. The operation method of the processor of any one of A1-A6, further comprising:
   recording a first position information of a first fine-grained area currently operated by the first operation and a second position information of a second fine-grained area currently operated by the second operation; and
   executing the first operation when there is no overlap between the first fine-grained area and the second fine-grained area, which includes:
      executing the first operation when the first position information is inconsistent with the second position information.
A8. The operation method of the processor of A7, wherein the first position information includes a first count of fine-grained areas that have been processed in the first operation, and the second position information includes a second count of fine-grained areas that have been processed in the second operation, wherein the executing the first operation when the first position information is inconsistent with the second position information includes:
   executing the first operation when the first operation is an operation after the second operation, and the first count is less than the second count.
A9. The operation method of the processor of A1, wherein the target storage area includes an operable area and an inoperable area, wherein the determining whether there is an overlap between the first fine-grained area currently targeted by the first operation and the second fine-grained area currently targeted by the second operation when there is a second operation includes:
   when there is a second operation, and the first fine-grained area in the target storage area currently targeted by the first operation is located in the operable area, determining whether there is an overlap between the first fine-grained area currently targeted by the first operation and the second fine-grained area currently targeted by the second operation.
A10. The operation method of the processor of A9, wherein the inoperable area includes a plurality of fine-grained areas including the second fine-grained area, and a position of the second fine-grained area in the inoperable area is updated with update of an operating position of the second operation, wherein the operation method of the processor further includes:
   updating the position of the inoperable area after the second fine-grained area targeted by the second operation moves out of the inoperable area.
A11. The operation method of the processor of A9, wherein the inoperable area includes a plurality of fine-grained areas including the second fine-grained area, and the second fine-grained area is located at a set position in the inoperable area, and the position of the inoperable area is updated with the update of the operating position of the second operation.
A12. The operation method of the processor of A1, wherein the target storage area includes a circular buffer and storage area.
A13. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:
   when there is no overlap between the first fine-grained area and the second fine-grained area, determining whether the state indicator of the first fine-grained area shows that the operation executed on the first fine-grained area is completed; and
   executing the first operation when the state indicator of the first fine-grained area shows that the operation executed on the first fine-grained area is completed.
A14. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:
   determining whether the state indicator of the first fine-grained area shows that the operation executed on the first fine-grained area is completed; and
   executing the first operation when the state indicator of the first fine-grained area shows that the operation executed on the first fine-grained area is completed, and there is no overlap between the first fine-grained area and the second fine-grained area.
A15. The operation method of the processor of A1, wherein target operands of the first operation and the second operation are the same, and the target storage area is a storage area of the target operands.
A16. The operation method of the processor of A1, wherein the target storage area is an overlap between the first storage area of the first operand of the first operation and the second storage area of the second operand of the second operation.
A17. The operation method of the processor of any one of A1-A16, further comprising:
   dividing the whole storage area where the target storage area is located as a plurality of fine-grained areas.
A18. The operation method of the processor of any one of A1-A17, further comprising:
   dividing the first storage area of the first operand of the first operation as a plurality of fine-grained areas according to the division information of the first fine-grained carried in the first operation; and
   dividing the second storage area of the operand of the second operation as a plurality of fine-grained areas according to the division information of the second fine-grained carried in the second operation.
A19. An operation apparatus of a processor, comprising:
   an operation determining module configured to determine whether there is an ongoing second operation for a target storage area when a first operation is an operation for the target storage area, where the target storage area includes at least one fine-grained area;
   an overlap determining module configured to determine, when there is a second operation, whether there is an overlap between a first fine-grained area currently targeted by the first operation and a second fine-grained area currently targeted by the second operation; and
   an executing module configured to execute the first operation when there is no overlap between the first fine-grained area and the second fine-grained area.
A20. The operation apparatus of the processor of A19, further comprising:
   an execution control module configured to block the first operation when there is an overlap between the first fine-grained area and the second fine-grained area.
A21. The operation apparatus of the processor of A19, wherein at least one of the first operation and the second operation is a writing operation.
A22. The operation apparatus of the processor of A19, wherein a size and/or quantity of fine-grained areas is determined according to at least one of an area where data with preset length is located and an area where data with preset dimension is located.
A23. The operation apparatus of the processor of A19, wherein the size and/or quantity of the fine-grained areas may be determined according to at least one of the hardware computing capability and the hardware bandwidth.
A24. The operation apparatus of the processor of A19, wherein the first operation is an operation in a first processing instruction, the second operation is an operation in a second processing instruction, and the second processing instruction is a processing instruction prior to the first processing instruction in an instruction queue.
A25. The operation apparatus of the processor of any one of A19-A24, further comprising:
   a position recording module configured to record a first position information of a first fine-grained area currently operated by the first operation and a second position information of a second fine-grained area currently operated by the second operation;
   where the executing module includes a first executing sub-module configured to execute the first operation when the first position information is inconsistent with the second position information.
A26. The operation apparatus of the processor of A25, wherein the first position information includes a first count of fine-grained areas that have been processed in the first operation, and the second position information includes a second count of fine-grained areas that have been processed in the second operation, wherein the first executing sub-module is further configured to:
   execute the first operation when the first operation is an operation after the second operation, and the first count is less than the second count.
A27. The operation apparatus of the processor of A19, wherein the target storage area includes an operable area and an inoperable area, wherein the overlap determining module includes:
   a determining sub-module configured to, when there is a second operation, and the first fine-grained area in the target storage area currently targeted by the first operation is located in the operable area, determine whether there is an overlap between the first fine-grained area currently targeted by the first operation and the second fine-grained area currently targeted by the second operation.
A28. The operation apparatus of the processor of A27, wherein the inoperable area includes a plurality of fine-grained areas including the second fine-grained area, and a position of the second fine-grained area in the inoperable area is updated with update of an operating position of the second operation, wherein the operation apparatus of the processor further includes:
   an updating module configured to update the position of the inoperable area after the second fine-grained area targeted by the second operation moves out of the inoperable area.
A29. The operation apparatus of the processor of A27, wherein the inoperable area includes a plurality of fine-grained areas including the second fine-grained area, and the second fine-grained area is located at a set position in the inoperable area, and the position of the inoperable area is updated with the update of the operating position of the second operation.
A30. The operation apparatus of the processor of A19, wherein the target storage area includes a circular buffer and storage area.
A31. The operation apparatus of the processor of A19, wherein the fine-grained area includes a state indicator, and the state indicator shows whether an operation executed on the fine-grained area is completed or not completed, wherein the executing module includes:
   a first state determining sub-module configured to, when there is no overlap between the first fine-grained area and the second fine-grained area, determine whether the state indicator of the first fine-grained area shows that the operation executed on the first fine-grained area is completed; and
   a second executing sub-module configured to execute the first operation when the state indicator of the first fine-grained area shows that the operation executed on the first fine-grained area is completed.
A32. The operation apparatus of the processor of A19, wherein the fine-grained area includes a state indicator, and the state indicator shows whether an operation executed on the fine-grained area is completed or not completed, wherein the executing module further includes:
   a second state determining sub-module configured to determine whether the state indicator of the first fine-grained area shows that the operation executed on the first fine-grained area is completed; and
   a third executing sub-module configured to execute the first operation when the state indicator of the first fine-grained area shows that the operation executed on the first fine-grained area is completed, and there is no overlap between the first fine-grained area and the second fine-grained area.
A33. The operation apparatus of the processor of A19, wherein target operands of the first operation and the second operation are the same, and the target storage area is a storage area of the target operands.
A34. The operation apparatus of the processor of A19, wherein the target storage area is an overlap between the first storage area of the first operand of the first operation and the second storage area of the second operand of the second operation.
A35. The operation apparatus of the processor of any one of A19-A34, further comprising:
   a first setting module configured to divide a whole storage area where the target storage area is located as a plurality of fine-grained areas.
A36. The operation apparatus of the processor of any one of A19-A35, further comprising:
   a second setting module configured to divide the first storage area of the first operand of the first operation as a plurality of fine-grained areas according to the division information of the first fine-grained carried in the first operation; and
   a third setting module configured to divide the second storage area of the operand of the second operation as a plurality of fine-grained areas according to the division information of the second fine-grained carried in the second operation.
A37. An artificial intelligence chip, comprising the operation apparatus of the processor of any one of A19-A36.
A38. An electronic device, comprising the artificial intelligence chip of A37.
A39. A board card, comprising a storage device, an interface apparatus, a control device, and the artificial intelligence chip of A37, wherein
   the artificial intelligence chip is connected to the storage device, the control device, and the interface apparatus, respectively;
   the storage device is configured to store data;
   the interface apparatus is configured to implement data transfer between the artificial intelligence chip and an external equipment; and
   the control device is configured to monitor a state of the artificial intelligence chip.
A40. The board card of A39, wherein the storage device includes a plurality of groups of storage units, wherein each group of the storage units is connected with a neural network chip by a bus, and the storage units are DDR SDRAM; the artificial intelligence chip includes a DDR controller configured to control data transfer and data storage of each storage unit; and the interface apparatus is a standard PCIE interface.

The embodiments of the present disclosure have been described above, and the above description is exemplary, not exhaustive, and is not limited to the disclosed embodiments. Without departing from the scope and spirit of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

## Claims

1. An operation method of a processor, comprising:
when a first operation is an operation for a target storage area, determining whether there is an ongoing second operation for the target storage area, where the target storage area includes at least one fine-grained area,
when there is a second operation, determining whether there is an overlap between a first fine-grained area currently targeted by the first operation and a second fine-grained area currently targeted by the second operation, and
executing the first operation when there is no overlap between the first fine-grained area and the second fine-grained area.

2. The operation method of the processor of claim 1, wherein a size and/or quantity of fine-grained areas is determined according to at least one of followings: an area where data with a preset length is located, an area where data with a preset dimension is located, a computing capability of hardware, and a bandwidth of the hardware.

3. The operation method of the processor of claim 1, wherein the first operation is an operation in a first processing instruction, the second operation is an operation in a second processing instruction, and the second processing instruction is a processing instruction prior to the first processing instruction in an instruction queue.

4. The operation method of the processor of any one of claims 1-3, further comprising:
recording first position information of the first fine-grained area currently operated by the first operation and second position information of the second fine-grained area currently operated by the second operation, and
executing the first operation when there is no overlap between the first fine-grained area and the second fine-grained area, which includes:
executing the first operation when the first position information is inconsistent with the second position information.

5. The operation method of the processor of claim 4, wherein the first position information includes a first count of fine-grained areas that have been processed in the first operation, and the second position information includes a second count of fine-grained areas that have been processed in the second operation, wherein the executing the first operation when the first position information is inconsistent with the second position information includes:
executing the first operation when the first operation is an operation after the second operation, and the first count is less than the second count.

6. The operation method of the processor of claim 1, wherein the target storage area includes an operable area and an inoperable area, wherein the determining whether there is an overlap between the first fine-grained area currently targeted by the first operation and the second fine-grained area currently targeted by the second operation when there is a second operation includes:
when there is a second operation, and the first fine-grained area in the target storage area currently targeted by the first operation is located in the operable area, determining whether there is an overlap between the first fine-grained area currently targeted by the first operation and the second fine-grained area currently targeted by the second operation.

7. The operation method of the processor of claim 6, wherein the inoperable area includes a plurality of fine-grained areas including the second fine-grained area, and a position of the second fine-grained area in the inoperable area is updated with update of an operating position of the second operation, wherein the operation method of the processor further includes:
updating a position of the inoperable area after the second fine-grained area targeted by the second operation moves out of the inoperable area.

8. The operation method of the processor of claim 6, wherein the inoperable area includes a plurality of fine-grained areas including the second fine-grained area, and the second fine-grained area is located at a set position in the inoperable area, and the position of the inoperable area is updated with the update of the operating position of the second operation.

9. The operation method of the processor of claim 1, wherein the fine-grained area includes a state indicator, and the state indicator shows whether an operation executed on the fine-grained area is completed or not completed, wherein the executing the first operation when there is no overlap between the first fine-grained area and the second fine-grained area includes:
when there is no overlap between the first fine-grained area and the second fine-grained area, determining whether the state indicator of the first fine-grained area shows that the operation executed on the first fine-grained area is completed, and
executing the first operation when the state indicator of the first fine-grained area shows that the operation executed on the first fine-grained area is completed.

10. The operation method of the processor of claim 1, wherein the fine-grained area includes a state indicator, and the state indicator shows whether an operation executed on the fine-grained area is completed or not completed, wherein the executing the first operation when there is no overlap between the first fine-grained area and the second fine-grained area includes:
determining whether the state indicator of the first fine-grained area shows that the operation executed on the first fine-grained area is completed, and
executing the first operation when the state indicator of the first fine-grained area shows that the operation executed on the first fine-grained area is completed, and there is no overlap between the first fine-grained area and the second fine-grained area.

11. The operation method of the processor claim 1,
wherein target operands of the first operation are consistent with target operands of the second operation, and the target storage area is a storage area of the target operands,
or
wherein the target storage area is an overlap between a first storage area of a first operand of the first operation and a second storage area of a second operand of the second operation.

12. An operation apparatus of a processor, comprising means for carrying out the method of any of claims 1 to 11.

13. An artificial intelligence chip, comprising the operation apparatus of the processor of claim 12.

14. An electronic device, comprising the artificial intelligence chip of claim 13.

15. A board card, comprising a storage device, an interface apparatus, a control device, and the artificial intelligence chip of claim 13, wherein
the artificial intelligence chip is connected to the storage device, the control device, and the interface apparatus, respectively,
the storage device is configured to store data,
the interface apparatus is configured to implement data transfer between the artificial intelligence chip and an external equipment, and
the control device is configured to monitor state of the artificial intelligence chip.
